# EUROPÄISCHE PATENTANMELDUNG

(11) **EP 4 336 688 A1**
(43) Veröffentlichungstag der Anmeldung: **13.03.2024**
(21) Anmeldenummer: 22194634.6
(22) Anmeldetag: 08.09.2022
(51) Int. Cl.: H02G 3/04, F16L 5/02, F16L 5/04, H02G 3/22, E04B 2/74

(54) **VORRICHTUNG UND VERFAHREN ZUM HERSTELLEN UND ABDICHTEN EINER LEITUNGSDURCHFÜHRUNG DIREKT UNTER EINER RAUMDECKE**

(71) Anmelder: Hilti Aktiengesellschaft, 9494 Schaan (LI)
(72) Erfinder: Förg, Christian, 86807 Buchloe (DE)
(74) Vertreter: Hilti Aktiengesellschaft Corporate Intellectual Property

(57) **Zusammenfassung**

Die Erfindung betrifft eine Vorrichtung (1) zum Herstellen und Abdichten einer Leitungsdurchführung direkt unter einer Raumdecke (2), insbesondere in einer Trockenbauwand, umfassend:
- eine an der Decke (2) zu befestigende Durchführungsbox (3) mit zwei einander gegenüberliegenden offenen Stirnseiten (4) und sich dazwischen erstreckenden Seitenwänden (5), die zur Decke (2) hin offen und von der Decke (2) zu verschließen sind, sodass die Seitenwände (5) in einem an der Decke (2) montierten Zustand der Box (3) zusammen mit der Decke (2) einen in Umfangrichtung geschlossenen axialen Durchlasskanal (6) zum Durchführen von Leitungen (7) bilden; sowie
- ein oder mehrere Auflagerahmenelemente (8), wobei jedes Auflagerahmenelement (8) an den Seitenwänden (5) der Box (3) außenseitig angeformt oder befestigt ist und sich radial nach außen derart erstreckt, dass es eine im Wesentlichen ebene Auflagefläche (10) zum Abstützen einer Wandplatte (9), beispielsweise einer Gipskartonplatte, beim Erzeugen oder Verschließen einer vertikalen Wand, insbesondere einer Trockenbauwand, um die Box (3) herum bildet.

## Beschreibung

Die Erfindung betrifft eine Vorrichtung und ein entsprechendes Verfahren zum Herstellen und Abdichten einer Leitungsdurchführung, beispielsweise für Kabel oder Rohre. Die Leitungsdurchführung soll dabei durch eine herzustellende oder zu verschließende vertikale Wand, insbesondere eine Trockenbauwand, führen und direkt unter einer Raumdecke verlaufen, beispielsweise in einem Gebäude. Insbesondere kann es sich dabei um eine brandschutzgerechte Abdichtung der Leitungsdurchführung, im Speziellen gegen Rauchgase und/oder gegen Wärmeübertragung, handeln.

Brandschotts, d. h. Wiederherstellung des Feuerwiderstands eines Bauelements wie Wand oder Decke nach dessen Öffnung und der Installation von Rohr- und Elektroleitungen, werden in Trockenbauwänden normalerweise auf eine von folgenden zwei verschiedenen Weisen hergestellt:
Bei einer ersten Variante ist die Trockenbauwand bereits von Anfang an vorhanden. Die Öffnung wird nachträglich in die Wand geschnitten, beispielsweise mittels einer Lochsäge. Danach wird beispielsweise eine vorgefertigte Brandschutz-Kabelbox, wie sie im Stand der Technik zur Abschottung von Rohr- oder Kabeldurchführungen durch eine Gebäudewand in verschiedenen Ausführungen bekannt sind, installiert. Es können aber auch zunächst die Leitungen installiert werden, die Öffnung kann dann beispielsweise mit Brandschutzstopfen aus einem intumeszierenden PU-Schaumstoff (Polyurethan), oder aber nur mittels eines Mineralwollschotts wieder verschlossen werden.

Bei einer zweiten Variante wird eine Aussparung in der Trockenbauwand bereits beim Erstellen der Trockenbauwand geschaffen. Diese Vorgehensweise wird typischerweise gewählt, wenn größere Öffnungen geschaffen werden müssen. Hier wird beispielsweise gleich mit der Konstruktion des Ständerwerks der Wand, etwa durch das Einsetzten von geeigneten Trockenbauprofilen (auch Wechsel genannt), eine große Öffnung geschaffen.

Es sind darüber hinaus auch immer mehr vorgefertigte Kabelboxen verfügbar, die beispielsweise in eine Betondecke eingegossen werden können. Des Weiteren sind auch mehrere Arten von einfachen Brandschutz-Kabelboxen bekannt, die direkt unter die Decke geschraubt werden, um Kabel unter der Decke zu führen. Nachteilig bei den letzteren Kabelboxen ist allerdings, dass hier trotz der Verwendung eines vorgefertigten Elements noch viele teilweise komplizierte Arbeitsschritte notwendig sind, wie beispielsweise: Anbringen einer Dichtung zwischen der Decke und der Durchführungsbox; Anbringen einer Grundplatte; Installation der Leitungen; Schließen der Box; Installation der Trockenbauelemente (Ständerwerk + Gipsplatten); Abdichtung der Wand zur Durchführungsbox; Abdichten der Leitungen innerhalb der Box.

Diese und weitere Vorrichtungen zur brandschutzgerechten Herstellung und/oder Abdichtung von Leitungsdurchführungen sind beispielsweise auch aus EP 3736928 A1, DE 9310405 U1, US 7193153 B2, WO 06045985 A1, EP 2350512 B1, WO 14160353 A1, WO 12009211 A2, EP 2467914 B1 oder WO 16058026 A1 bekannt.

Es ist Aufgabe der vorliegenden Erfindung, eine alternative oder verbesserte Vorrichtung und ein entsprechendes Verfahren zur Herstellung und Abdichtung einer Leitungsdurchführung, insbesondere zur brandschutzgerechten Abschottung, bereitzustellen, mit denen insbesondere die Montage für den Anwender vereinfacht und/oder die Funktionalität etwa im Hinblick auf die Dichtigkeit und/oder Robustheit der Vorrichtung verbessert werden kann.

Diese Aufgabe wird durch eine Vorrichtung gemäß Anspruch 1 sowie durch ein zugehöriges Verfahren zum Herstellen und Abdichten einer Leitungsdurchführung und eine dadurch hergestellte Leitungsdurchführung gemäß den nebengeordneten Ansprüchen gelöst. Weitere Ausgestaltungen sind in den abhängigen Ansprüchen angegeben. Alle hierin für die Vorrichtung beschriebenen Merkmale und Wirkungen gelten entsprechend auch für das Verfahren und die Leitungsdurchführung, wie auch umgekehrt.

Die Leitungsdurchführung kann insbesondere elektrische Kabel, aber auch Rohre oder andersartige Leitungen betreffen, die beispielsweise durch einen Brandabschnitt geführt werden sollen. Mit der nachfolgend vorgestellten Vorrichtung kann die Leitungsdurchführung beispielsweise in einer erst herzustellenden Wand, insbesondere einer Trockenbauwand, grundsätzlich aber auch in einem zu verschließenden Wanddurchbruch erzeugt werden. Die Wand kann beispielsweise eine vertikale Wand in einem Gebäude sein. Insbesondere kann es sich dabei um eine brandschutzgerechte Abdichtung der Leitungsdurchführung, im Speziellen gegen Rauchgase und/oder gegen Wärmeübertragung, handeln.

Gemäß einem ersten Aspekt ist eine Vorrichtung zum Herstellen und Abdichten einer Leitungsdurchführung direkt unter einer Raumdecke, insbesondere einer Betondecke, vorgesehen.

Hierzu umfasst die Vorrichtung eine an der Decke zu befestigende Durchführungsbox (kurz: Box) mit zwei einander gegenüberliegenden offenen Stirnseiten und sich dazwischen (d. h. in Richtung einer Box-Längsachse, also axial) erstreckenden Seitenwänden. Dabei sind die Box bzw. deren Seitenwände zur Decke hin offen und werden von der Decke bei der Montage daran geschlossen. In einem an der Decke montierten Zustand der Box bilden ihre Seitenwände somit zusammen mit der Decke einen in Umfangrichtung geschlossenen axialen Durchlasskanal zum Durchführen von Leitungen.

Ferner umfasst die Vorrichtung ein oder mehrere Auflagerahmenelemente (hierin auch Montagerahmen genannt) zum Abstützen, Ausrichten und/oder Befestigen einer oder mehrerer Wandplatten, aus denen eine vertikale Wand, insbesondere eine Trockenbauwand, errichtet werden soll, an der Box und um die Box herum. Hierzu ist jedes Auflagerahmenelement außenseitig an den Seitenwänden der Box angeformt oder anders unbeweglich oder beweglich befestigt und erstreckt sich radial nach außen derart, dass es eine im Wesentlichen ebene Auflagefläche zum Abstützen einer Wandplatte, beispielsweise einer Gipskartonplatte, beim Erzeugen oder Verschließen der Wand um die Box herum bildet.

Mit einer so vorgefertigten Vorrichtung lassen sich die eingangs erwähnten Probleme und die oben genannten Aufgaben lösen. Insbesondere lässt sich durch die Anwendung dieser Vorrichtung und des zugehörigen Verfahrens, aufgrund der hierin beschriebenen Ausgestaltung und gegenseitiger Anordnung der Box und der Auflagerahmenelemente eine Vielzahl der notwendigen Arbeitsschritte bei der Herstellung und Abdichtung einer Leitungsdurchführung im Vergleich zum obigen Stand der Technik vereinfachen. Außerdem zeichnet sich diese Vorrichtung dadurch aus, dass sie im Vergleich zum obigen Stand der Technik auch deutlich weniger Bauteile enthält, bei vergleichbarer oder sogar besserer Funktionalität und Robustheit.

Die Leitungsdurchführung lässt sich mit dieser Vorrichtung bereits zusammen mit dem Aufbau einer Trockenbauwand installieren. Durch Führung der Leitungen, insbesondere Kabel, direkt unterhalb der Decke kann eine Wärmeübertragung durch die Leitungen, etwa im Brandfall auf die feuerabgewandte Seite, erheblich reduziert werden, weil ein (Groß-)Teil dieser Wärmemenge beispielsweise direkt an die Betondecke abgeleitet werden kann. Insbesondere kann zudem die Anbindung der Leitungsdurchführung zur Trockenbauwand, wie weiter unten ausführlicher beschrieben, so ausgeführt sein, dass eine etwaige von statischen Belastungen herrührende Deckenbeweglichkeit von beispielsweise +/- 0,5" ohne Zusatzmaßnahmen möglich ist.

Die Box kann insbesondere einteilig, d. h. in sich zusammenhängend, ausgebildet sein. Beispielsweise kann sie in einem Stück durch Formgießen oder andere Fertigungsverfahren hergestellt sein.

Gemäß einer Ausführungsform ist auch das Auflagerahmenelement oder mindestens eines der mehreren Auflagerahmenelemente einteilig mit der Box ausgebildet. Dies kann eine besonders robuste und/oder einfach herzustellende Vorrichtung ergeben. Das Auflagerahmenelement oder mindestens eines der mehreren Auflagerahmenelemente kann bei dieser Ausführungsform aber auch in anderer Weise dauerhaft und unbeweglich an der Box fixiert, etwa angeformt, angeschweißt, angeschraubt oder angeklebt sein, um eine ähnliche Funktionalität zu erreichen.

Alternativ oder zusätzlich hierzu kann mindestens eins der mehreren Auflagerahmenelemente an der Box axial verschiebbar sein, beispielsweise nach Art einer Schiene. Dadurch lässt sich die Position der Wandplatte in Richtung entlang der Box variieren bzw. anpassen. Bei dieser Ausführungsform ist die Vorrichtung insbesondere an vom Standard abweichende Wandstärken flexibel anpassbar. Optional können hierzu beispielsweise ineinandergreifende, komplementär ausgebildete axiale Schienenelemente an der Box außenseitig und am Auflagerahmenelement innenseitig ausgebildet sein. Das verschiebbare Auflagerahmenelement kann beispielsweise von der Box insgesamt abnehmbar sein oder aber permanent - jedoch beweglich - mit der Box verbunden sein, beispielsweise indem seine axiale Verschiebbarkeit an der Box zu beiden Stirnseiten durch mechanische Anschläge begrenzt ist.

Im radialen Querschnitt kann die Box insbesondere U-förmig, beispielsweise innen- und/oder außenseitig weitgehend rechteckig, ausgebildet sein. Auch andere Querschnittsformen, insbesondere auch abgerundete Geometrien, sind möglich. Eine rechteckige Geometrie kann nicht nur besonders einfach in der Herstellung und/oder Handhabung der Vorrichtung sein, sondern sich auch beispielsweise besonders gut zum Anlegen und zur Abstützung bzw. Ausrichtung der Wandplatten an der Box und an den Auflagerahmenelementen eignen. Sie kann auch besonders raumsparend und dabei günstig dafür sein, die durchzuführenden Leitungen möglichst alle und möglichst großflächig direkt an der Decke zu befestigen, um eine möglichst effektive Wärmeübertragung von warmen Leitungen and die kühle Decke zu ermöglichen.

Bei einer spezifischen Ausgestaltung umgibt jedes Auflagerahmenelement die Seitenwände der Box im radialen Querschnitt vollständig. Mit anderen Worten bildet bei dieser Ausgestaltung jedes Auflagerahmenelement um die Box herum (in deren an der Decke montiertem Zustand) eine durchgehende Auflagefläche zum Abstützen einer Wandplatte beim Erzeugen oder Verschließen der Wand. Dies kann sowohl das Herstellen der Wand als auch das Abdichten der Leitungsdurchführung zur Wand hin vereinfachen und verbessern.

Gemäß einer Ausführungsform umfasst die Vorrichtung ferner mindestens ein elastisch verformbares abdichtendes Verschlusselement, das zum Einsetzten in den Durchlasskanal (bei Bedarf mehrmals wiederholt mit Herausnehmen zwischendurch) an mindestens einer der Stirnseiten der Box und zum dichten Verschließen des Durchlasskanals, ob vor oder nach der Verlegung der Leitungen, ausgebildet und dimensioniert ist. Das elastisch komprimierbare Verschlusselement kann hierzu beispielsweise zumindest teilweise aus einem elastisch verformbaren Schaumstoff gefertigt sein und einen Querschnitt aufweisen, der in etwa gleich oder etwas größer als der innere radiale Querschnitt der Box ist, um diesen dicht samt den darin verlegten Leitungen zu verschließen. Das Verschlusselement kann insbesondere einer luftdichten Abdichtung der Durchführungsbox zu den Leitungen dienen. Es kann beispielsweise aus Dosenschaum oder Weichschaum gefertigt sein.

Die Vorrichtung, insbesondere die Box und/oder die Auflagerahmenelemente, kann beispielsweise aus einem hochvernetzten Hartschaum, insbesondere aus Polyurethan (PU), hergestellt sein. Dieser PU-Schaum kann insbesondere für Brandschutzanwendungen in an sich bekannter Weise mit typischen Brandschutzadditiven, wie beispielsweise Blähgraphit, Ammoniumpolyphosphat und dergleichen, gefüllt sein.

Die Box und/oder deren Auflagerahmenelemente können aber auch aus Metall und/oder auf Basis von anderen organischen oder anorganischen Materialien mit anwendungsspezifisch gewünschten Eigenschaften im Hinblick auf die Porosität, das Gewicht und/oder die Festigkeit und vieles mehr (beispielsweise wie weiter unten beschrieben) gefertigt werden. Beispielsweise eignen sich hierzu Gips oder andere Werkstoffe auf Zementbasis. Es ist aber auch möglich, dass eine derartige Hülle, d. h. die Vorrichtung bzw. deren Box, auch auf keramischer Basis hergestellt wird, beispielsweise auf Tonbasis. Die Aushärtung kann dann beispielsweise durch einen Brennvorgang erfolgen.

Eine Vorrichtung, deren Box und Auflagerahmenelemente aus nicht intumeszierenden (d. h. unter Hitzeeinwirkung nicht aufschäumenden) Materialien sind, kann für Durchführungen, die beispielsweise allein zur Abdichtung gegen Schall und Luft oder andere Gase und Gerüche ausgelegt sind und nicht feuerbeständig sein müssen, direkt verwendet werden. Bei der Abdichtung der Leitung ist in solchen Anwendungen keine besondere Materialklasse zwingend erforderlich.

Wird allerdings eine solche Vorrichtung (insbesondere aus anorganischen Materialien) für Brandschutzdurchführungen verwendet, so muss bei der Leitungsabdichtung darauf geachtet werden, dass die Leitungsabdichtung so wiederstandfähig ist, dass auch hier die gewünschte Feuerwiderstandsdauer erreicht werden kann. Als Leitungsabdichtung mit Brandschutzfunktion können hier beispielsweise intumeszierende (d. h. unter Hitzeeinwirkung aufschäumende) Schaumstoffe oder Mineralwolle in Kombination mit einer Brandschutzdichtmasse an sich bekannter Art eingesetzt werden.

Bei der Verwendung eines intumeszierenden Basismaterials für die Box kann diese im Brandfall die Öffnung im Zentrum (d. h. den Durchlasskanal) durch das hitzebedingte Aufschäumen des Basismaterials selbst schließen. Die übrige Abdichtung, etwa durch mindestens ein oben beschriebenes Verschlusselement, kann dann weitestgehend der Rauchgasdichtigkeit dienen, sodass hierfür auch ein normal entflammbarer Schaumstoff ausreichend ist.

Im Hinblick auf weitere Materialeigenschaften für das Basismaterial der Box kann insbesondere ein Material bevorzugt werden, das einen geringen Anteil an Poren und dadurch eine Material-Volumendichte von beispielsweise zwischen 0,3 und 1, bei anorganischen Materialien bis 2,7 aufweist. Bei einem hochvernetzten Polyurethan (PU) wird das beispielsweise dadurch gewährleistet, dass das Material etwas geschäumt ist. Bei anorganischen Materialien ist hier die Verwendung von Hohlkugeln eine Möglichkeit, um Poren mit einer gewünschten Größe zu erzeugen. Natürlich kann diese gewünschte Porosität auch durch Luft- oder Gaseinschluss während der Herstellung gewährleistet sein.

Die genannte Porosität kann insbesondere bei der Befestigung der Box bzw. der Auflagerahmenelemente mittels Schrauben an der Decke und/oder an einem Trockenbauprofil hilfreich sein. Als Alternative wären beispielsweise für eine Schraubbefestigung vorgebohrte Durchgangslöcher in der Box bzw. den Auflagerahmenelementen erforderlich, was bei Verwendung eines geeigneten porösen Basismaterials nicht notwendig ist.

Gemäß einer Ausführungsform ist daher die Box und/oder jedes Auflagerahmenelement abgesehen von etwaigen Auskleidungen (beispielsweise von Brandschutz- und/oder sonstigen Schutzschichten) aus einem porösen Basismaterial hergestellt. Das poröse Basismaterial kann bei dieser Ausführungsform insbesondere ein anorganisches Material mit einer Volumendichte von höchstens etwa 3, insbesondere zwischen etwa 0,3 und etwa 2,7, oder ein organisches Material mit einer Volumendichte von höchstens etwa 2, insbesondere zwischen etwa 0,3 und etwa 1, sein. Die genannte Porosität des Basismaterials bzw. die genannte Volumendichte kann insbesondere durch im Material gleichmäßig verteilte Hohlkugeln erzeugt sein.

Wie bereits erwähnt, kann Vorrichtung insbesondere vorbestimmte Brandschutzanforderungen erfüllen. Zu diesem Zweck kann beispielsweise mindestens eines ihrer Bestandteile Brandschutzadditive, intumeszierende und/oder feuerfeste Materialien aufweisen oder daraus bestehen. Alternativ oder zusätzlich kann beispielsweise mindestens ein eigens hierzu vorgesehenes Intumeszenzelement im Durchlasskanal und/oder an mindestens einem Auflagerahmenelement angeordnet und ausgebildet sein, um den Durchlasskanal und/oder die Leitungsdurchführung bezüglich der Wand im Brandfall gegen Brandausbreitung abzudichten. Dies kann beispielsweise in Form zumindest teilweiser innen- und/oder außenseitiger Auskleidung der Seitenwände der Box und/oder der Auflagerahmenelemente mit Intumeszentstreifen oder -Bändern realisiert sein.

Im Hinblick auf den Brandschutz sind auch für die Materialwahl des hierin genannten mindestens einen elastisch verformbaren Verschlusselements verschiedene Varianten möglich, abhängig davon, welche Abdichtwirkung erreicht werden soll und welche Materialien in der Box verwendet wurden. Wird beispielsweise die Box aus einem intumeszierenden Material gefertigt, so ist der erforderliche Feuerwiederstand weitestgehend durch diese Wirkungsweise erreichbar. Die Materialwahl für das Verschlusselement ist dann vielfältig. Wird hingegen die Box nur auf Basis von anorganischen Materialien gefertigt, so kann die erforderliche Feuerwiderstandsdauer durch die Wahl des Abdichtmaterials des Verschlusselements erreicht werden. Hierzu geeignete Materialien könnten beispielsweise ein intumeszierender Schaumstoff oder auch Mineralwolle mit brandschutzwirksamer Beschichtung sein.

Für die Anordnung der Verschlusselemente im Durchlasskanal hat sich insbesondere im Hinblick auf die Brandschutzwirkung eine Installationstiefe von etwa 10-50 mm je eines Verschlusselements an jeder Stirnseite der Box (d. h. eine beidseitige Abdichtung des Durchlasskanals) als besonders geeignet herausgestellt.

Was die Materialwahl für die Auflagerahmenelemente (hierin auch Montagerahmen genannt) angeht, so ist ein derartiger Rahmen beispielsweise aus Metall am kostengünstigsten zu fertigen. Metall selbst weist jedoch nur sehr geringe Isoliereigenschaften auf. Eine erforderliche Isolierwirkung kann in diesem Fall beispielsweise durch einen dünnen intumeszierenden Streifen gewährleistet werden, der auf den Montagerahmen aufgeklebt wird. Im Brandfall kann ein Spalt zwischen der Box und der jeweiligen Wandplatte (Gipskartonplatte) durch diese Intumeszensschicht vollständig geschlossen werden. Für die Isolierwirkung einer solchen Intumeszensschicht kann beispielsweise gewährleistet werden, dass insbesondere die geforderte maximale Temperatur auf der feuerabgewandten Seite von beispielsweise maximal +180°C auch in diesem Raumbereich eingehalten werden kann.

Für ein abnehmbares oder an der Box verschiebbares Auflagerahmenelement ist auch Verwendung eines (insbesondere u-förmigen) Blechrahmens möglich, das nur innenseitig, d. h. zur Box hin, und/oder auf seiner Auflagefläche mit einem intumeszierenden Material beschichtetet ist. Alternativ ist hie auch ein u-förmiges Blech ohne Beschichtung und nur mit einem Intumeszierenden Schaumstück zum raumseitigen Abschluss zur Box und/oder zur jeweiligen Wandplatte hin möglich.

Insbesondere kann die Vorrichtung ferner mindestens ein Wanderzeugungs-Deckenprofilelement (hierin auch Trockenbauprofil, Deckenprofil, Trockenbaudeckenprofil oder Metallprofil des (Trockenbau-)Ständerwerks genannt) umfassen, das zum Anbringen unter der Decke und zu einer Befestigung an dem jeweiligen Auflagerahmenelement zur Erweiterung seiner Auflagefläche für eine Wandplatte, beispielsweise eine Gipskartonplatte, beim Erzeugen oder Verschließen der vertikalen Wand um die Box herum ausgebildet ist. Solch ein Wanderzeugungs-Deckenprofilelement kann insbesondere aus Metall sein. Es kann beispielsweise passgenau zum Aufstecken auf ein oder mehrere Auflagerahmenelemente der Vorrichtung ausgebildet sein. Andererseits kann die hierin beschriebene Vorrichtung ohne solche Deckenprofilelemente bereitgestellt sein und mit standardmäßig verfügbaren Deckenprofilelementen verwendet werden, für die wiederum die Auflagerahmenelemente der Vorrichtung passend ausgelegt und dimensioniert sind.

Gemäß einem weiteren Aspekt ist ein Verfahren zum Herstellen und Abdichten einer Leitungsdurchführung direkt unter einer Raumdecke unter Verwendung der hierin vorgestellten Vorrichtung vorgesehen. Das Verfahren kann insbesondere folgende Schritte umfassen:
Die Durchführungsbox wird an der Decke befestigt, sodass die Seitenwände der Box zusammen mit der Decke einen in Umfangrichtung geschlossenen axialen Durchlasskanal zum Durchführen von Leitungen durch eine unter der Decke zu errichtende vertikale Wand bilden. Gegebenenfalls kann darauf ein Ausrichten und Anbringen mindestens eines oben genannten Wanderzeugungs-Deckenprofilelements an dem einen oder den mehreren Auflagerahmenelementen folgen, um die durch das jeweilige Auflagerahmenelement gebildete Auflagefläche zum Abstützen einer Wandplatte in Richtung entlang der Decke zu erweitern.

Davor, danach oder zu einem anderen Zeitpunkt nachträglich kann eine oder mehrere Leitungen in dem von der Box gebildeten Durchlasskanal verlegt werden. Dabei können die Leitungen an der Decke derart fixiert werden, dass sie einen größtmöglichen Berührungskontakt zu der Decke haben. Dies kann insbesondere zum Abführen der Wärme von den Leitungen zu der Decke zur Kühlung der Leitungen im Brandfall beitragen.

Falls die Vorrichtung ein oder mehrere der hierin genannten Verschlusselemente umfasst, kann der von der Box gebildete Durchlasskanal samt den darin gegebenenfalls verlegten Leitungen, von mindestens einer Stirnseite mit einem jeweiligen Verschlusselement abgedichtet werden. Hierzu wird das eigens hierzu ausgebildete und dimensionierte Verschlusselement beispielsweise einfach in den Durchlasskanal eingesetzt, wie weiter oben ausführlicher beschrieben.

Um die Box herum kann davor oder danach eine vertikale Wand erzeugt werden, durch das Anlegen und Ausrichten mindestens einer Wandplatte, insbesondere einer Gipskartonplatte, mit ihrer Wandplattenfläche unmittelbar an der Auflagefläche des jeweiligen Auflagerahmenelements und gegebenenfalls auch an dem mindestens einen daran befestigten Wanderzeugungs-Deckenprofilelement. Die Schritte der Verlegung der Leitungen und der Abdichtung des Durchlasskanals durch Verschlusselemente können grundsätzlich vor oder nach jedem anderen Schritt des Verfahrens in beliebiger Reihenfolge und insbesondere auch nach der Erzeugung der Wand durchgeführt bzw. mehrmals nachträglich wiederholt werden

Gemäß einer Ausführungsform wird beim Erzeugen der Wand die jeweilige Wandplatte an dem zugehörigen Auflagerahmenelement so angelegt und ausgerichtet, dass zwischen der Box und einem der Box zugewandten Rand der Wandplatte ein vorbestimmter, insbesondere vertikaler, Abstand verbleibt, der entlang des Auflagerahmenelements gemessen wird. Hierdurch kann eine entsprechende Beweglichkeit der Box bezüglich der Wandplatte, beispielsweise bei statischen Belastungen der Decke, ermöglicht werden, ohne dass weitere Zusatzmaßnahmen erforderlich sind. Wie weiter oben erwähnt, kann die Beweglichkeit beispielsweise +/- 0,5" betragen.

Gemäß einem weiteren Aspekt ist eine Leitungsdurchführung vorgesehen, die direkt unter einer Raumdecke in einer daran anschließenden vertikalen Wand durch ein hierin vorgestelltes Verfahren hergestellt ist. Wie erwähnt, kann dabei zwischen der Box und dem der Box zugewandten Rand der jeweiligen Wandplatte der Wand insbesondere ein vorbestimmter, insbesondere vertikaler, Abstand, der entlang des Auflagerahmenelements gemessen wird, verbleiben, der eine Bewegungsfreiheit der Wandplatte von beispielsweise etwa +/- 0,5" ermöglicht.

Die obigen Aspekte, Ausführungsformen und spezifische Ausgestaltungen der Erfindung werden nachfolgend anhand der in den Zeichnungen dargestellten Ausführungsbeispiele näher erläutert. Die Zeichnungen sind schematisch. Sie können, müssen jedoch nicht als maßstabsgetreu zu verstehen sein. Es zeigen:
- Figur 1: eine perspektivische Ansicht einer Vorrichtung gemäß einer Ausführungsform der Erfindung zum Herstellen und Abdichten einer Leitungsdurchführung, mit zwei einteilig mit einer Durchführungsbox ausgebildeten Auflagerahmenelementen;
- Figur 2: in derselben perspektivischen Ansicht die Vorrichtung der Fig. 1 mit einem an den Auflagerahmenelementen befestigten Wanderzeugungs-Deckenprofilelement;
- Figur 3: eine weitere perspektivische Ansicht der Vorrichtung der Fig. 2 in deren an der Decke montiertem Zustand und mit verlegten Leitungen;
- Figur 4: einen vergrößerten Ausschnitt der Fig. 3 mit Blick auf die Befestigung des Deckenprofilelements an den Auflagerahmenelementen;
- Figur 5: eine weitere perspektivische Ansicht der Vorrichtung der Fig. 3 mit einem durch ein Verschlusselement abgedichteten Durchlasskanal;
- Figur 6: einen radialen Querschnitt einer Vorrichtung nach einer Ausführungsform der Erfindung mit einer intumeszierenden Materialschicht als Innen-Auskleidung der Box; und
- Figur 7: eine perspektivische Ansicht einer Leitungsdurchführung, die mit einem Verfahren gemäß einem Ausführungsbeispiel der Erfindung hergestellt und abgedichtet wurde.

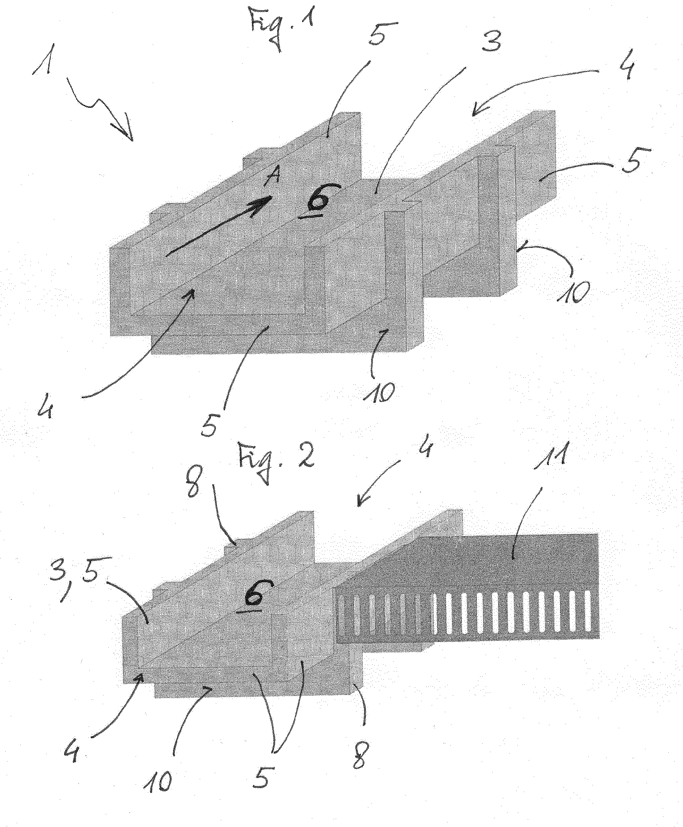

Alle weiter oben in der Beschreibung und in den nachfolgenden Ansprüchen erwähnten verschiedenen Ausführungsformen, Varianten und spezifischen Ausgestaltungsmerkmale der Vorrichtung zum Herstellen und Abdichten einer Leitungsdurchführung, des zugehörigen Verfahrens und der damit hergestellten Leitungsdurchführung gemäß den obigen Aspekten der Erfindung können bei den in den Figuren 1 bis 7 gezeigten Beispielen implementiert sein. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale, die in den Fig. 1-7 gezeigt sind. Zur Vermeidung von Wiederholungen wird daher auf die ausführlichere Beschreibung der Erfindung weiter oben und in den Ansprüchen verwiesen.

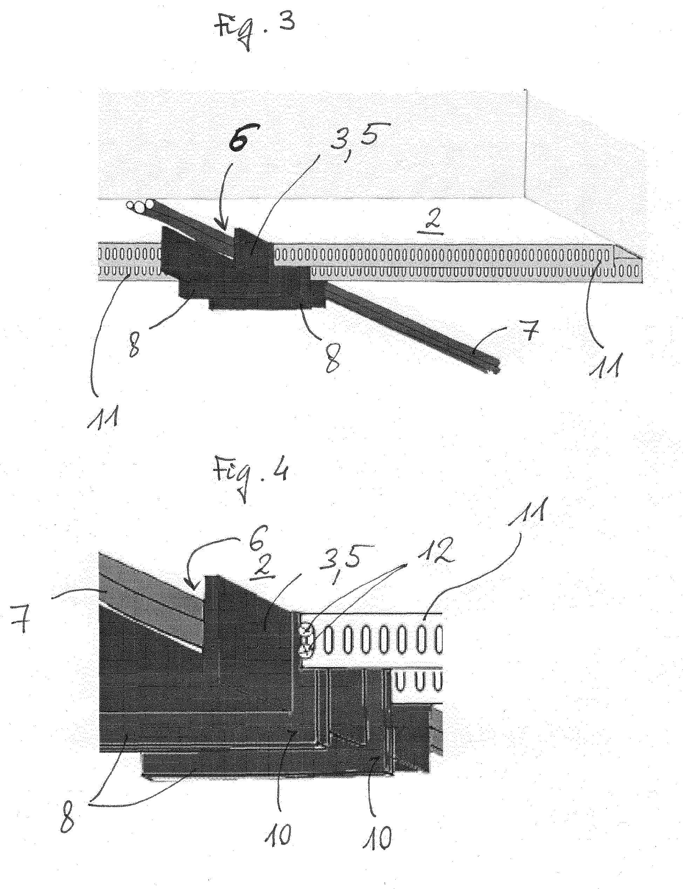

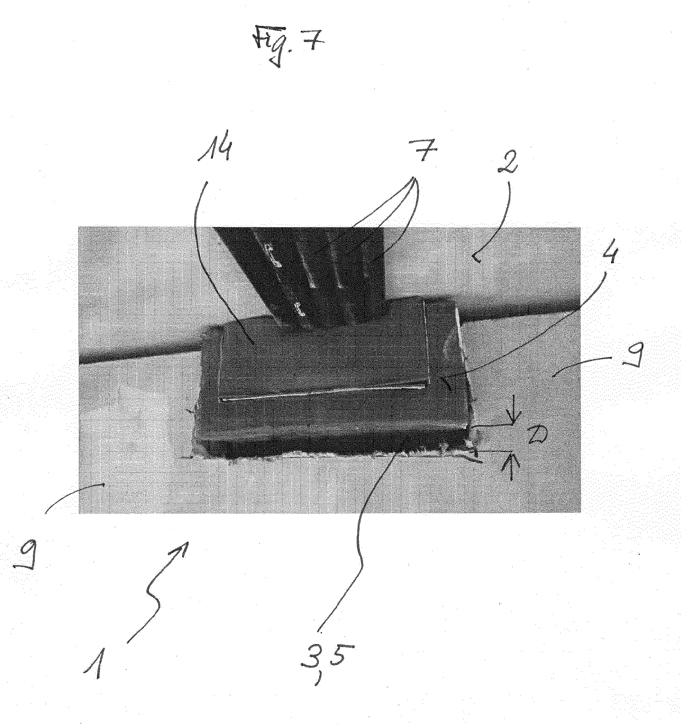

Figur 1 zeigt eine perspektivische Ansicht einer Vorrichtung 1 gemäß einem Ausführungsbeispiel der Erfindung zum Herstellen und Abdichten einer Leitungsdurchführung direkt unter einer Raumdecke 2 (vgl. Fig. 3-7) in einer erst später zu erstellenden Wand (vgl. Fig. 7), in diesem Beispiel einer Trockenbauwand.

Hierzu umfasst die Vorrichtung 1 eine an der Decke 2 zu befestigende Durchführungsbox 3 (Box 3) mit zwei einander gegenüberliegenden offenen Stirnseiten 4 und sich dazwischen in Richtung der Box-Längsachse A erstreckenden Seitenwänden 5. Dabei ist die Box 3 zur Decke 2 hin offen und wird von der Decke 2 bei der Montage daran geschlossen. In einem an der Decke 2 montierten Zustand der Box 3 (siehe Fig. 3-7) bilden ihre Seitenwände 5 somit zusammen mit der Decke 2 einen in Umfangrichtung geschlossenen axialen Durchlasskanal 6 zum Durchführen von Leitungen 7.

Ferner umfasst die Vorrichtung 1 in diesem Beispiel zwei Auflagerahmenelemente 8 (hierin auch Montagerahmen genannt) zum Abstützen, Ausrichten und/oder Befestigen einer oder mehrerer Wandplatten 9 (in diesem Beispiel Gipskartonplatten, siehe Fig. 7), aus denen die Trockenbauwand errichtet werden soll, an der Box 3 und um die Box 3 herum. Hierzu ist in diesem Beispiel jedes Auflagerahmenelement 8 außenseitig an den Seitenwänden 5 der Box 3 angeformt und erstreckt sich radial nach außen derart, dass es eine im Wesentlichen ebene Auflagefläche 10 zum Abstützen der Wandplatte 9 um die Box 3 herum bildet.

In diesem Beispiel sind beide Auflagerahmenelemente 8 einteilig, und damit auch unbeweglich mit der Durchführungsbox 3 ausgebildet. Alternativ oder zusätzlich hierzu kann ein Auflagerahmenelement 8 an der Box 3 axial verschiebbar sein (nicht dargestellt), um die Position der Wandplatte 9 in Richtung entlang der Box 3 variieren bzw. anpassen zu können.

In diesem Beispiel sind im radialen Querschnitt sowohl die Box 3 als auch beide Auflagerahmenelemente 8 U-förmig und rein beispielhaft innen- und/oder außenseitig rechteckig ausgebildet. Als Basismaterial zu deren Herstellung kann beispielsweise poröses Material weiter oben ausführlich beschriebener Art verwendet werden.

Figur 2 zeigt in derselben perspektivischen Ansicht wie Fig. 1 die Vorrichtung 1 mit einem an den Auflagerahmenelementen 8 befestigten Wanderzeugungs-Deckenprofilelement 11 (hierin auch Trockenbauprofil, Deckenprofil, Trockenbaudeckenprofil oder Metallprofil des (Trockenbau-)Ständerwerks genannt). Das Deckenprofilelement 11 ist in diesem Beispiel ein leistenförmiges Element aus Metall, das passgenau auf die beiden Auflagerahmenelemente 8 aufgesteckt werden kann und dadurch diesbezüglich ausgerichtet und vorfixiert ist. Anschließend kann es an den Auflagerahmenelemente 8 beispielsweise durch Trockenbauschrauben 12 (vgl. Fig. 4) befestigt werden.

Fig. 3 zeigt eine weitere perspektivische Ansicht der Vorrichtung 1 der Fig. 2 in deren an der Decke 2 montiertem Zustand und mit verlegten Leitungen 7, in diesem Beispiel einigen Kabeln. Dabei zeigt Fig. 4 einen vergrößerten Ausschnitt der Fig. 3 mit Blick auf die Befestigung des Deckenprofilelements 11 an den Auflagerahmenelementen 8 durch Schrauben 12. Durch die in den Figuren dargestellte Anordnung der Leitungen 7 (hier Kabel) ohne Abstand, d. h. direkt unterhalb der Decke 2, hat sich in einem repräsentativen Brandtest als sehr vorteilhaft herausgestellt, dass die Leitungen 7 Wärme auf der feuerabgewandten Seite direkt in die "kalte" Betondecke 2 abführen können.

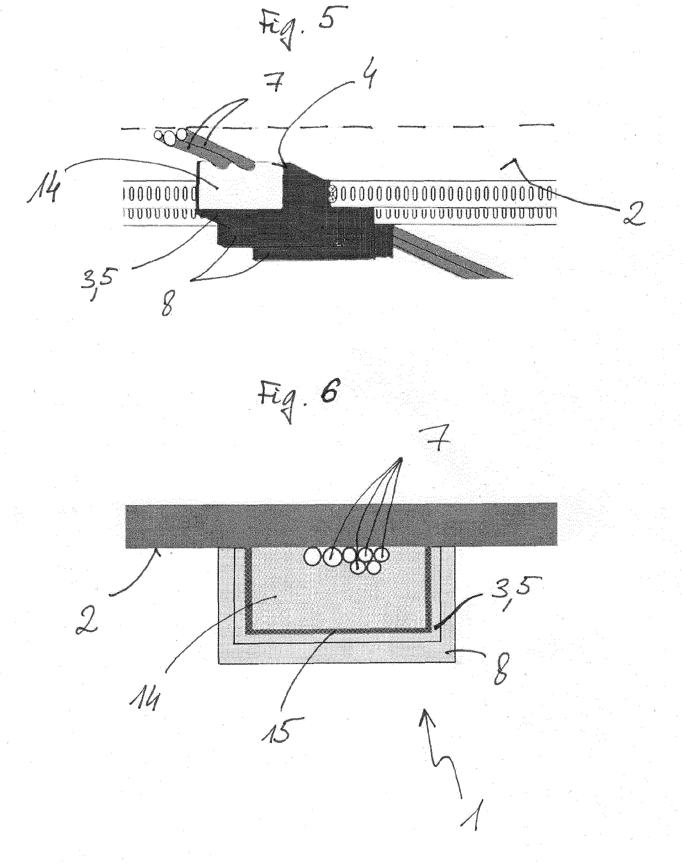

Fig. 5 zeigt eine weitere perspektivische Ansicht der Vorrichtung 1 der Fig. 3, wobei deren Durchlasskanal 6 mit einem elastisch verformbaren Verschlusselement 14 abgedichtet (d. h. dicht verschlossen) worden ist. Das Verschlusselement 14 ist in diesem Beispiel ein Schaumelement, das zur Abdichtung des Durchlasskanals dimensioniert und elastisch komprimierbar ist. Wie in Fig. 5 veranschaulicht, ist das Verschlusselement 14 durch seine Elastizität für eine einfache Form-Anpassung an die Leitungen 7 ausgelegt, um die Box 3 bei unterschiedlicher Belegung durch Leitungen 7 (und insbesondere auch bei einer Null-Belegung) ausreichend abzudichten.

Fig. 6 zeigt einen radialen Querschnitt einer Vorrichtung 1 nach einer Ausführungsform der Erfindung, wobei es sich insbesondere um die Vorrichtung der Fig. 1-5 handeln kann. In diesem Beispiel ist die Box 3 durch ein Verschlusselement 14 abgedichtet und zusätzlich innenseitig mit einer intumeszierenden Materialschicht/Lage 15 ausgekleidet, sodass die intumeszierende Lage 15 die Leitungsdurchführung im Brandfall durch Ausdehnung in den Durchlasskanal 6 hinein zusätzlich branddicht verschließen kann. Diese Variante kann beispielsweise zum Einsatz kommen, wenn die Box 3 selbst auf Basis von anorganischen Materialien hergestellt wird. Ansonsten kann, wie weiter oben erwähnt, auch das Basismaterial der Box 3 und/oder der Auflagerahmenelemente 8 intumeszierendes Material enthalten oder daraus bestehen, sodass keine zusätzliche Auskleidung oder Beschichtung zur Erfüllung von Brandschutzanforderungen nötig ist.

Fig. 7 zeigt eine perspektivische Ansicht einer fertigen Leitungsdurchführung, die mit einem Verfahren gemäß einem Ausführungsbeispiel der Erfindung hergestellt und abgedichtet wurde. Die dargestellte Leitungsdurchführung ist unter Verwendung einer Vorrichtung 1 gemäß Fig. 1-6 wie hierin weiter oben und in den Ansprüchen beschrieben hergestellt worden. Dabei liegen die oben erwähnten Montageplatten 9 (beispielsweise Gipskartonplatten) auf dem Montagerahmen (d. h. auf den Auflageflächen 10 der Auflagerahmenelemente 8, die in Fig. 7 verdeckt sind) flächig auf, so dass hier ein gleitender Anschluss entsteht. Zudem werden in diesem Beispiel die Montageplatten 9 in einem vorbestimmten vertikalen Abstand D zur Box 3 installiert, so dass bei einer statischen Belastung der Decke 2, diese sich ungehindert durchbiegen kann. Dadurch kann beispielsweise eine Beweglichkeit von beispielsweise +/- 0,5" ohne Zusatzmaßnahmen möglich sein.

Wie bereits erwähnt, kann die hierin vorgestellte Vorrichtung und Verfahren zum Herstellen und Abdichten einer Leitungsdurchführung insbesondere eine schnelle Montage ermöglichen, wobei keine weiteren Dichtstoffe notwendig sind. Die Installation der Durchführung und bei Bedarf auch der Leitungen ist in einem sehr frühen Baustadium der Wand möglich. Die Montage der Leitungen und der Durchführung ist auch bei einer noch nicht fertiggestellten Wand möglich. Ein gleitender Anschluss der Vorrichtung zur Gipskartonwand macht eine Bewegung ohne Zusatzmaßnahme zwischen Decke und Trockenbauwand möglich. Die Leitungsdurchführung kann kostengünstig hergestellt werden, bei Erfüllung aller erforderlichen Dichtigkeits- und bei Bedarf auch Brandschutzanforderungen. In der U-förmige Durchführungsbox kann bereits die Brandschutzfunktion integriert sein. Die luftdichte Abdichtung kann auch durch Standardmaterialien, wie z.B. Bauschaum, erreicht werden. Alternativ oder zusätzlich kann die Brandschutzfunktion aber auch in die abdichtenden Verschlusselemente verlagert sein. Die Box 3 und/oder deren Auflagerahmenelemente 8 können insbesondere thermisch beständig für Temperaturen von mehr als 1000°C ausgeführt sein.

## Patentansprüche

1. Vorrichtung (1) zum Herstellen und Abdichten einer Leitungsdurchführung direkt unter einer Raumdecke (2), insbesondere in einer Trockenbauwand, umfassend:
- eine an der Decke (2) zu befestigende Durchführungsbox (3) mit zwei einander gegenüberliegenden offenen Stirnseiten (4) und sich dazwischen erstreckenden Seitenwänden (5), die zur Decke (2) hin offen und von der Decke (2) zu verschließen sind, sodass die Seitenwände (5) in einem an der Decke (2) montierten Zustand der Box (3) zusammen mit der Decke (2) einen in Umfangrichtung geschlossenen axialen Durchlasskanal (6) zum Durchführen von Leitungen (7) bilden; sowie
- ein oder mehrere Auflagerahmenelemente (8), wobei jedes Auflagerahmenelement (8) an den Seitenwänden (5) der Box (3) außenseitig angeformt oder befestigt ist und sich radial nach außen derart erstreckt, dass es eine im Wesentlichen ebene Auflagefläche (10) zum Abstützen einer Wandplatte (9), beispielsweise einer Gipskartonplatte, beim Erzeugen oder Verschließen einer vertikalen Wand, insbesondere einer Trockenbauwand, um die Box (3) herum bildet.

2. Vorrichtung (1) nach Anspruch 1, wobei
- die Box (3) einteilig ausgebildet ist.

3. Vorrichtung (1) nach Anspruch 1 oder 2, wobei
- das Auflagerahmenelement (8) oder mindestens eines der mehreren Auflagerahmenelemente (8) integral, insbesondere einteilig, mit der Box (3) ausgebildet oder in anderer Weise dauerhaft und unbeweglich an dieser fixiert ist.

4. Vorrichtung (1) nach Anspruch 1 oder 2, wobei
- das Auflagerahmenelement (8) oder mindestens eines der mehreren Auflagerahmenelemente (8) an der Box axial verschiebbar ist.

5. Vorrichtung (1) nach einem der vorhergehenden Ansprüche, wobei
- die Box (3) einen U-förmigen, insbesondere innen- und/oder außenseitig im Wesentlichen rechteckigen, radialen Querschnitt aufweist.

6. Vorrichtung (1) nach einem der vorhergehenden Ansprüche, wobei
- jedes Auflagerahmenelement (8) die Seitenwände (5) der Box (3) im radialen Querschnitt vollständig umgibt.

7. Vorrichtung (1) nach einem der vorhergehenden Ansprüche, ferner umfassend:
- mindestens ein elastisch verformbares abdichtendes Verschlusselement (14), das zum wiederholten Einsetzten in den Durchlasskanal (6) an mindestens einer der Stirnseiten (4) der Box (3), gegebenenfalls nach der Verlegung der Leitungen (7), und zum dichten Verschließen des Durchlasskanals (6), gegebenenfalls mit den darin verlegten Leitungen (7), ausgebildet und dimensioniert ist.

8. Vorrichtung (1) nach einem der vorhergehenden Ansprüche, wobei
- die Box (3) und/oder jedes Auflagerahmenelement (8) abgesehen von etwaigen Auskleidungen aus einem porösen Basismaterial hergestellt ist.

9. Vorrichtung (1) nach Anspruch 8, wobei das poröse Basismaterial
- ein anorganisches Material mit einer Volumendichte von höchstens etwa 3, vorzugsweise zwischen etwa 0,3 und etwa 2,7 ist; oder
- ein organisches Material mit einer Volumendichte von höchstens etwa 2, vorzugsweise zwischen etwa 0,3 und etwa 1 ist.

10. Vorrichtung (1) nach Anspruch 8 oder 9, wobei
- die Porosität des Basismaterials und vorzugsweise auch die genannte Volumendichte durch im Material im Wesentlichen gleichmäßig verteilte Hohlkugeln erzeugt ist.

11. Vorrichtung (1) nach einem der vorhergehenden Ansprüche, die vorbestimmte Brandschutzanforderungen erfüllt, indem
- mindestens eines ihrer Bestandteile Brandschutzadditive, intumeszierende und/oder feuerfeste Materialien aufweist oder daraus besteht; und/oder
- mindestens ein Intumeszenzelement im Durchlasskanal (6) und/oder an mindestens einem der Auflagerahmenelemente (8) angeordnet und ausgebildet ist, um den Durchlasskanal (6) und/oder die Wandöffnung im Brandfall gegen Brandausbreitung abzudichten.

12. Vorrichtung (1) nach einem der vorhergehenden Ansprüche, ferner umfassend:
- mindestens ein Wanderzeugungs-Deckenprofilelement (11), das zum Anbringen unter der Decke (2) und zu einer Befestigung an dem jeweiligen Auflagerahmenelement (8) zur Erweiterung seiner Auflagefläche (10) für eine Wandplatte (9), beispielsweise eine Gipskartonplatte, beim Erzeugen oder Verschließen der vertikalen Wand um die Box (3) herum ausgebildet ist, insbesondere aus Metall.

13. Verfahren zum Herstellen und Abdichten einer Leitungsdurchführung direkt unter einer Raumdecke (2) unter Verwendung einer Vorrichtung (1) nach einem der vorhergehenden Ansprüche, umfassend die Schritte:
- Befestigen der Durchführungsbox (3) an der Decke (2), sodass die Seitenwände (5) der Box (3) zusammen mit der Decke (2) einen in Umfangrichtung geschlossenen axialen Durchlasskanal (6) zum Durchführen von Leitungen (7) durch eine unter der Decke (2) zu errichtende vertikale Wand bilden;
- gegebenenfalls Ausrichten und Anbringen mindestens eines Wanderzeugungs-Deckenprofilelements (11) an dem einen oder den mehreren Auflagerahmenelementen (8), um die durch das jeweilige Auflagerahmenelement (8) gebildete Auflagefläche (10) zum Abstützen einer Wandplatte (9) zu erweitern;
- gegebenenfalls Verlegen einer oder mehrerer Leitungen (7) in dem Durchlasskanal (6) und vorzugsweise derartiges Fixieren der einen oder der mehreren Leitungen (7) an der Decke (2), dass die Leitung(en) (7) einen größtmöglichen Berührungskontakt zu der Decke (2) hat/haben;
- gegebenenfalls Abdichten des Durchlasskanals (6), samt den darin gegebenenfalls verlegten Leitungen (7), von mindestens einer Stirnseite (4) mit einem jeweiligen Verschlusselement (14);
- Erzeugen einer vertikalen Wand, insbesondere einer Trockenbauwand, um die Box (3) herum durch das Anlegen und Ausrichten mindestens einer Wandplatte (9), insbesondere einer Gipskartonplatte, mit ihrer Wandplattenfläche unmittelbar an der Auflagefläche (10) des jeweiligen Auflagerahmenelements (8) und gegebenenfalls auch an dem mindestens einen daran befestigten Wanderzeugungs-Deckenprofilelement (11).

14. Verfahren nach Anspruch 13, wobei
- beim Erzeugen der Wand die jeweilige Wandplatte (9) an dem zugehörigen Auflagerahmenelement (8) so angelegt und ausgerichtet wird, dass ein vorbestimmter, insbesondere vertikaler, Abstand (D), der entlang des Auflagerahmenelements (8) gemessen wird, zwischen der Box (3) und einem der Box (3) zugewandten Rand der Wandplatte (9) verbleibt.

15. Leitungsdurchführung, die direkt unter einer Raumdecke (2) in einer daran anschließenden vertikalen Wand, insbesondere eine Trockenbauwand, durch ein Verfahren nach Anspruch 13 oder 14 hergestellt wurde, wobei
- zwischen der Box (3) und dem der Box (3) zugewandten Rand der jeweiligen Wandplatte (9) der Wand vorzugsweise ein vorbestimmter, insbesondere vertikaler, Abstand (D), der entlang des Auflagerahmenelements (8) gemessen wird, verbleibt, der eine Bewegungsfreiheit der Wandplatte (9) relativ zur Decke (2) von beispielsweise etwa +/- 0,5" ermöglicht.
